# EUROPEAN PATENT SPECIFICATION

(11) **EP 0 785 063 B1**
(45) Date of publication and mention of the grant of the patent: **06.09.2000**
(21) Application number: 96200131.9
(22) Date of filing: 19.01.1996
(51) Int. Cl.: B30B 9/32

(54) **Manipulator for motor car bodies**
Handhabungsvorrichtung für Kraftfahrzeugkarosserien
Manipulateur pour carrosseries de voitures

(43) Date of publication of application: 23.07.1997
(73) Proprietor: Metaalbedrijf Busschers B.V., 7482 GZ Haaksbergen (NL)
(72) Inventor: Busschers, Alfonsius Johannes Maria, NL-7482 GZ Haaksbergen (NL)

(56) References cited:
- EP-A- 0 053 930
- DE-A- 3 038 299
- US-A- 4 697 509
- US-A- 5 373 782
- PATENT ABSTRACTS OF JAPAN vol. 5, no. 162 (M-92) [834] , 17 October 1981 & JP-A-56 089400 (YUTANI JIYUUKOU), 20 July 1981,

## Description

The invention relates to an arrangement for dismantling vehicles, comprising at least one system of arms, interconnected by hinged joints and equipped with mechanical drive means, attached on one end to a reference frame and provided on another end with a clamping device for gripping at least a part of the vehicle, and a control unit for operating the drive means.

An arrangement of this kind is known from application EP-A-0 053 930, which likewise describes an arrangement used in the disposal of vehicles. The prior art arrangement is intended for compacting vehicle bodies previously stripped of their upholstery, engine, wheels, axles and the like. By contrast the present invention is intended to simplify the dismantling of the above-mentioned parts, and particularly to render it cheaper. To this end the arrangement is characterized in that the control means in combination with the drive means are arranged for enabling the vehicle at any time to be rotated and translated such that dismantling can always be conducted in an ergonomically at least substantially optimal fashion. Thus the vehicle can be dismantled more completely in an economically sound way, so that less residual waste needs to be disposed of. Moreover in this way compliance can easily be achieved with the ever stricter regulations governing the conditions under which staff should work. More particularly, it is possible for practically all activities to be performed from an upright stance, and it is no longer necessary for specific activities to be performed above the head or with a bent back.

An additional advantage is that for the removal of various liquids present in the vehicle, such as fuel, coolant, oil, and brake fluid, the vehicle can always be brought into a suitable position, enabling a substantially complete removal.

For a simple operation of the arrangement it is important that the various motions possible for the vehicle are mutually completely independent, so that a required motion does not entail safety endangering secondary motions. An advantageous embodiment of the invention is therefore characterized in that the system comprises a first, composite arm, for realizing, in the operating condition with the arm moving, of a translation of the vehicle in an at least substantially vertical plane. An advantageous implementation of this is characterized then in that the composite arm comprises a system of two arms disposed in parallel, attached on one side to the reference frame and on a second side attached to a second arm. With the drive means, for instance an hydraulic pressure cylinder, attached on one side to the reference frame and with another side attached to one of the parallel arms, the vertical motion can then be realized.

A still further favourable embodiment is characterized in that a third arm is provided, attached on one side to the second arm and provided on a second side with the clamping device, whereby preferably the drive means are arranged for realizing in the operating condition of a rotation of the third arm in an at least substantially vertical plane.

A still further favourable embodiment is characterized in that the clamping device comprises a fixed-position first clamp and a second clamp which, with the aid of the drive means, can be slid along the third arm, whereby the clamping device is preferably arranged for the lateral gripping of a roof of the vehicle. Such a grip is very stable, hence safe, and minimally impedes entry into the vehicle.

A still further favourable embodiment of the invention is characterized in that the clamping device additionally comprises a support, movable with the aid of the drive means at least substantially perpendicular to the third arm, for supporting an underside of the vehicle. This additional support is not strictly necessary, but provides an additional safety guarantee for the operating personnel. It is further assumed that this additional support precludes a supervisory agency prescribing more stringent safety measures, for instance a chain slung around the vehicle, such measures certainly being liable to complicate the dismantling work to a greater extent.

In yet another favourable embodiment of the invention the reference frame is arranged such that a rotation can be performed about an axis positioned vertically in the operating condition. By means of the clamping device a vehicle is then grabbed and moved along different dismantling stations, each equipped for the performance of a specific activity, whereby the vehicle can always be brought into an optimal position. In an advantageous implementation the reference frame is provided with four systems of arms, enabling the dismantling work to be conducted continuously at four places simultaneously.

The invention will now be explained in detail with reference to the following Figures, where:
- Fig. 1: shows a possible embodiment of an arrangement according to the invention in the starting position;
- Fig. 2: indicates the manner in which, using the arrangement, a vehicle is gripped;
- Fig. 3: indicates the manner in which, using the arrangement, a vehicle can be lifted vertically;
- Fig. 4: indicates the manner in which, using the arrangement, a vehicle can be rotated.

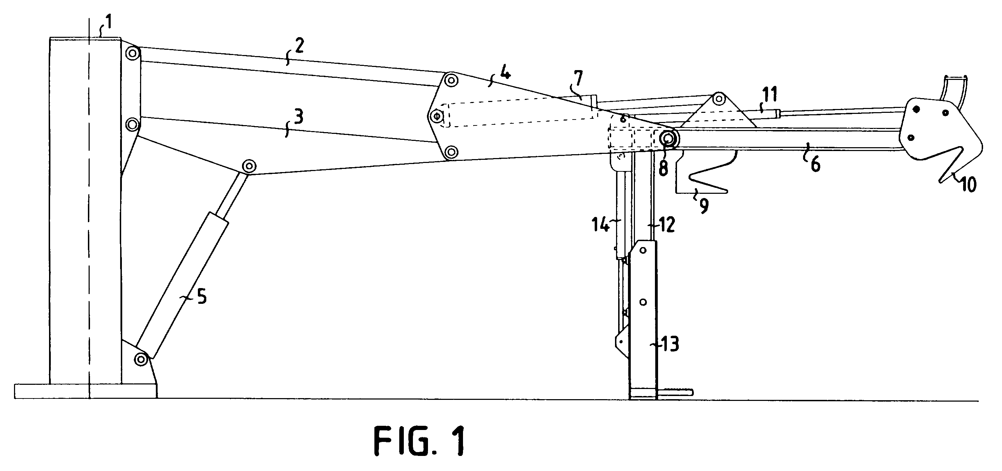

Fig. 1 shows a possible embodiment of an arrangement according to the invention in a starting position, ready for picking up a vehicle to be dismantled. To a reference frame, in this case implemented as a central column 1, is attached a system of two parallel arms 2,3, which in turn are connected to an arm 4. Between central column 1 and arm 3 an hydraulic cylinder 5 is fitted, with which arm 4, with the aid of the two parallel arms 2,3, can be moved truly vertically up and down. To arm 4 is attached an arm 6 which, with the aid of an hydraulic cylinder 7, can rotate about a spindle 8. To arm 6 are attached a fixed clamp 9 and a movable clamp 10 which, with the aid of an hydraulic cylinder 11, can be moved towards fixed clamp 9. Perpendicular to arm 6 is further rigidly attached an arm 12, to which a support 13 is fitted which, perpendicular to arm 6, can be moved back and forth by means of a hydraulic cylinder 14.

In the depicted starting position a vehicle to be dismantled is placed below the clamps 9,10, arm 6 then being moved vertically down with the aid of hydraulic cylinder 5. Eventually arm 6 comes to rest practically on top of the vehicle's roof. Subsequently, clamp 10 is moved towards clamp 9 with the aid of hydraulic cylinder 11, in the course of which the roof of the vehicle is laterally gripped. Then, support 13 is pulled up, with the aid of hydraulic cylinder 14, against the underside of the vehicle. This renders the vehicle is fully immobilized and ready for the actual dismantling process. The length of support 13 may be adjusted for instance manually, depending on the type of vehicle to be dismantled, such that a proper fixation is obtained without obstructing access to the parts to be dismantled.

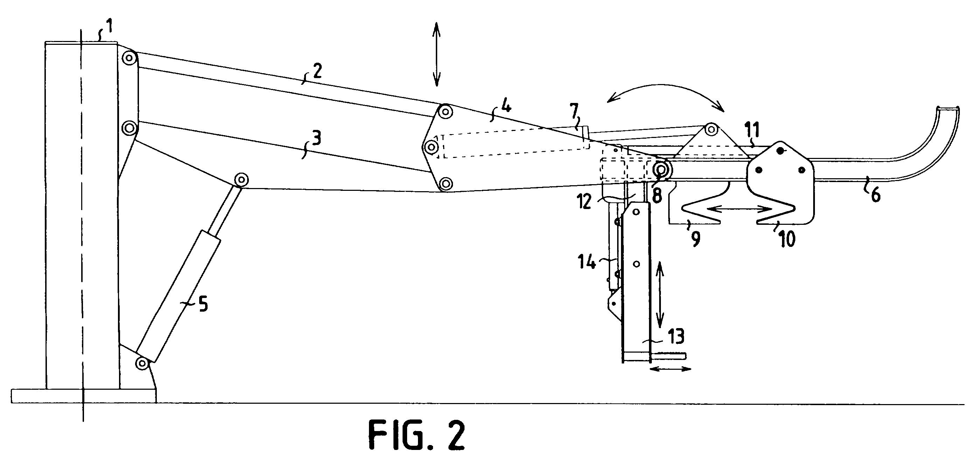

Fig. 2 indicates how, with the aid of the arrangement, a vehicle is gripped, additionally indicating what motions are possible. In the depicted position dismantling can begin, with for instance the upholstery and further synthetic materials being removed from the interior, while at the same time the wheels and the fenders may be disassembled together with any other parts which still possess commercial value.

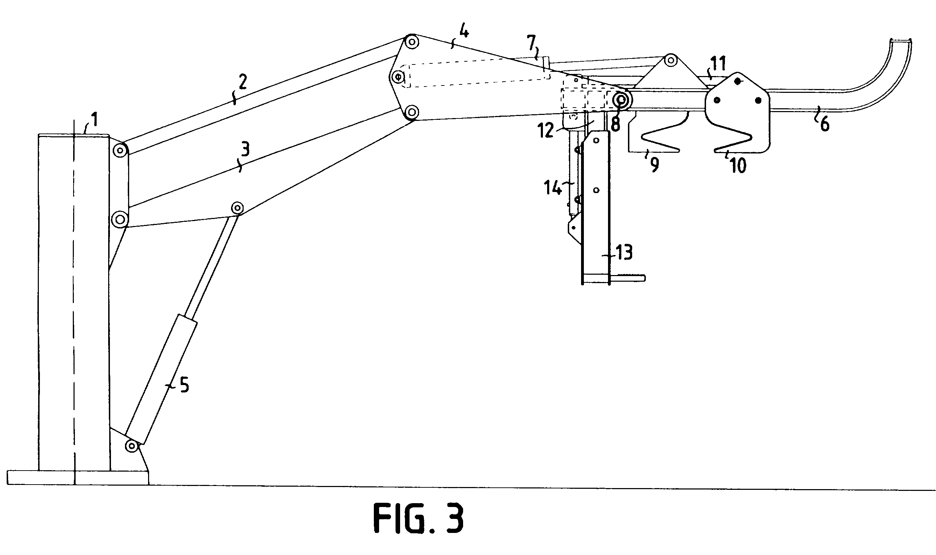

Fig. 3 indicates how, with the aid of hydraulic cylinder 5, the vehicle can be brought into such a position that the underside of the vehicle is accessible. In this position the axles will usually be removed and various liquids still present in the vehicle will be drained off. As a rule it can be said that approximately 75% of the disassembly work will take place at the underside of the vehicle. In this situation it is always possible to arbitrarily select the height of the vehicle using hydraulic control means (not shown) well known in the art.

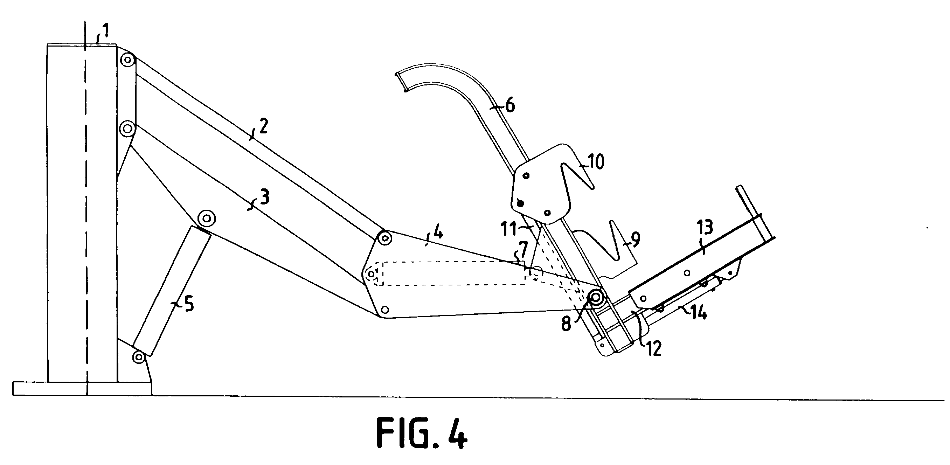

Fig. 4 shows how, with the aid of hydraulic cylinder 7, the vehicle can be rotated such that the engine, which must usually be dismounted from the underside of the vehicle, can simply be removed with the aid of a hoisting unit (not shown).

By installing central column 1 rotatably about a vertical axis it is possible to position the various phases of the dismantling process along a circular path to be traversed by the vehicle to be dismantled, streamlining the dismantling process still further. It is moreover possible to attach several identical systems of arms according to the invention to central column 1, so that predefined phases, for instance the ones illustrated in Figures 1 to 4, may continuously be completed in fixed locations. The final product of the arrangement is a shell that is practically exclusively composed of metal, to be moved off for further processing.

## Claims

1. Arrangement for dismantling vehicles, comprising at least one system of arms (2, 3, 4, 6, 12), interconnected by hinged joints and equipped with mechanical drive means, attached on one end to a reference frame 1 and provided on another end with a clamping device 9, 10 for gripping at least a part of the vehicle, and a control unit for operating the drive means, characterized in that the control means in combination with the drive means are arranged for enabling the vehicle at any time to be rotated and translated such that dismantling can always be conducted in an ergonomically at least substantially optimal fashion.

2. Arrangement as claimed in claim 1, characterized in that the system comprises a first, composite arm, for realizing, in the operating condition with the arm moving, of a translation of the vehicle in an at least substantially vertical plane.

3. Arrangement as claimed in claim 2, characterized in that the composite arm comprises a system of two arms (2, 3) disposed in parallel, attached on one side to the reference frame (1) and on a second side attached to a second arm (4).

4. Arrangement as claimed in claim 3, characterized in that a third arm (6) is provided, attached on one side to the second arm (4) and provided on a second side with the clamping device (9, 10).

5. Arrangement as claimed in claim 4, characterized in that the drive means are arranged for realizing in the operating condition a rotation of the third arm (6) in an at least substantially vertical plane.

6. Arrangement as claimed in claim 5, characterized in that the clamping device (9, 10) comprises a fixed-position first clamp and a second clamp which, with the aid of the drive means, can be slid along the third arm (6).

7. Arrangement as claimed in claim 6, characterized in that the clamping device (9, 10) is arranged for the lateral gripping of a roof of the vehicle.

8. Arrangement as claimed in claim 7, characterized in that the clamping device (9, 10) additionally comprises a support, movable with the aid of the drive means at least substantially perpendicular to the third arm (6), for supporting an underside of the vehicle.

9. Arrangement as claimed in any of the preceding claims, characterized in that the reference frame (1) is arranged such that a rotation can be performed about an axis positioned vertically in the operating condition.

10. Arrangement as claimed in claim 9, characterized in that the reference frame is equipped with four identical systems of arms.

## Patentansprüche

1. Vorrichtung für das Abwracken von Fahrzeugen, versehen mit zumindest einem System, bestehend aus gegenseitig mittels Scharnierverbindungen verbundenen und mit mechanischen Antriebsmitteln versehenen Armen (2,3,4,6,12), welches System an einem Ende an einem Bezugsgestell (1) befestigt und an einem anderen Ende mit einer Klemmvorrichtung (9, 10) versehen ist, für das Umklammern von zumindest einem Fahrzeugteil, und versehen mit einer Steuervorrichtung für das Bedienen der Antriebsmittel, dadurch gekennzeichnet, dass die Steuermittel in Kombination mit den Antriebsmitteln so eingerichtet sind, dass das Fahrzeug jederzeit so rotiert und translatiert werden kann, dass das Abwracken jederzeit auf eine ergonomische, zumindest im wesentlichen optimale Weise durchgeführt werden kann.

2. Vorrichtung gemäß Anspruch 1, dadurch gekennzeichnet, dass das System einen ersten, zusammengestellten Arm umfasst, für das im Betriebszustand während einer Bewegung des Armes Realisieren einer Translation des Fahrzeuges in einer zumindest im wesentlichen senkrechten Ebene.

3. Vorrichtung gemäß Anspruch 2, dadurch gekennzeichnet, dass der zusammengestellte Arm ein System von zwei parallel angeordneten Armen (2,3) umfasst, an einer Seite an dem Bezugsgestell (1) und an einer zweiten Seite an einem zweiten Arm (4) befestigt.

4. Vorrichtung gemäß Anspruch 3, dadurch gekennzeichnet, dass ein dritter Arm (6) vorgesehen ist, welcher an einer Seite an dem zweiten Arm (4) befestigt und an einer zweiten Seite mit einer Klemmvorrichtung (9,10) versehen ist.

5. Vorrichtung gemäß Anspruch 4, dadurch gekennzeichnet, dass die Antriebsmittel für das im Betriebszustand Rotieren des dritten Armes (6) in einer zumindest im wesentlichen senkrechten Ebene eingerichtet sind.

6. Vorrichtung gemäß Anspruch 5, dadurch gekennzeichnet, dass die Klemmvorrichtung (9,10) eine fest angeordnete erste Klemme sowie eine zweite, mit Hilfe der Antriebsmittel entlang dem dritten Arm (6) verschiebbare Klemme umfasst.

7. Vorrichtung gemäß Anspruch 6, dadurch gekennzeichnet, dass die Klemmvorrichtung (9,10) für das seitliche Umklammern eines Fahrzeugdaches eingerichtet ist.

8. Vorrichtung gemäß Anspruch 7, dadurch gekennzeichnet, dass die Klemmvorrichtung (9,10) weiterhin eine mit Hilfe der Antriebsmittel zumindest im wesentlichen senkrecht zum dritten Arm (6) bewegliche Unterstützung umfasst, für das Unterstützen eines Fahrzeugbodens.

9. Vorrichtung gemäß einem der vorangehenden Ansprüche, dadurch gekennzeichnet, dass das Bezugsgestell (1) so eingerichtet ist, dass es im Betriebszustand rund um eine senkrecht angeordnete Achse rotieren kann.

10. Vorrichtung gemäß Anspruch 9, dadurch gekennzeichnet, dass das Bezugsgestell mit vier identischen Systemen von Armen versehen ist.

## Revendications

1. Dispositif pour démonter des véhicules, comprenant au moins un système de bras de levier, assemblé par des articulations et prévu des moyens de transmission mécanique, d'un côté attaché à un bâti de référence et d'autre côté prévu d'un dispositif de serrage, pour serrer au moins une part du véhicule, et un organe de commande pour commander les moyens de transmission, caractérisé en ce que la combinaison de l'organe de commande et les moyens de transmission sont arrangés pour pouvoir tourner et déplacer continuellement la véhicule tellement que le démontage se déroule à une manière à peut près optimale, vue sous l'angle ergonomique.

2. Dispositif tel que revendiqué à revendication 1, caractérisé en ce que le système comprends un premier bras composé, pour réaliser, en condition de service, avec le bras en mouvement, une translation de la véhicule dans un plan au moins essentiellement vertical.

3. Dispositif tel que revendiqué à revendication 2, caractérisé en ce que le bras composé comprends un système de deux bras fonctionnant en parallèle, attachés d'un coté au bâti de référence et d'autre coté d'un deuxième bras.

4. Dispositif tel que revendiqué à revendication 3, caractérisé en ce que un troisième bras a été prévu, attaché d'un coté aux deuxième bras et d'autre coté prévu du dispositif de serrage.

5. Dispositif tel que revendiqué à revendication 4, caractérisé en ce que les moyens de transmission sont arrangés pour réaliser, en condition de service, une rotation du troisième bras dans un plan au moins essentiellement vertical.

6. Dispositif tel que revendiqué à revendication 5, caractérisé en ce que le dispositif de serrage comprends une première pince, montée immobile, et une deuxième pince, montée déplacable en long le troisième bras, en employant les moyens de transmission.

7. Dispositif tel que revendiqué à revendication 6, caractérisé en ce que le dispositif de serrage a été arrangé pour saisir latéralement un toit de la véhicule.

8. Dispositif tel que revendiqué à revendication 7, caractérisé en ce que le dispositif de serrage comprend additionnellement un support mouvant, en employant les moyens de transmission, au moins essentiellement perpendiculaire au troisième bras, pour supporter un fond de la véhicule.

9. Dispositif selon une des revendications précédentes, caractérisé en ce que le bâti de référence a été monté tournant autour un axe de rotation, en condition de service placé verticalement.

10. Dispositif tel que revendiqué à revendication 9, caractérisé en ce que le bâti de référence a été prévu de quatre systèmes identique de bras.
